# EUROPEAN PATENT SPECIFICATION

(11) **EP 1 975 449 B1**
(45) Date of publication and mention of the grant of the patent: **20.05.2009**
(21) Application number: 08003055.4
(22) Date of filing: 19.02.2008
(51) Int. Cl.: F16D 55/228

(54) **Vehicle disk brake**
Scheibenbremse zur Verwendung für Fahrzeuge
Frein à disque pour véhicule

(30) Priority: 27.03.2007 JP 2007081245
(43) Date of publication of application: 01.10.2008
(73) Proprietor: HONDA MOTOR CO., LTD., Tokyo 107-8556 (JP)
(72) Inventor: Toyoda, Hidetoshi, Wako-shi Saitama, 351-0193 (JP)
(74) Representative: Liska, Horst

(56) References cited:
- DE-A1- 3 713 201
- DE-A1- 4 234 818
- GB-A- 2 399 609
- JP-A- 10 175 533
- JP-A- 2003 166 566

## Description

### Technical Field

The present invention relates to a vehicle-use disc brake which includes a caliper body having first and second bodies which sandwich a pair of pads arranged on both sides of a brake disc rotated with a wheel between the first and second bodies and the brake disc, first and second pistons which are capable of pushing both pads toward the brake-disc side and are fitted in the first and second bodies coaxially and slidably, third and fourth pistons which are capable of pushing both pads toward the brake-disc side and are fitted in the first and second bodies coaxially and slidably on one sides of the first and second pistons along the circumferential direction of the brake disc, and fifth and sixth pistons which are capable of pushing both pads toward the brake-disc side and are fitted in the first and second bodies coaxially and slidably on another sides of the first and second pistons along the circumferential direction of the brake disc, wherein the first and second pistons are interlockingly operated with each other, and the third to sixth pistons are interlockingly operated.

### Background Art

Such a vehicle-use disc brake has been already known in view of Patent Document JP No. 3713857 and Patent Document No. JP-A-2005-121174.

### Problems that the Invention is to solve

Such a disc brake is used as a front and rear interlocking brake device of a motorcycle or the like, for example. In the brake device which arranges three pistons on each side of the brake disc, the pistons which are arranged at a center portion along the circumferential direction of the disc brake are interlockingly operated, and the remaining pistons are interlockingly operated and hence, a brake effect can be increased. Accordingly, cylinder holes which allow the respective pistons to be slidably fitted therein and are formed in a caliper body can make diameters thereof small thus realizing the miniaturization of a size of the caliper body in the radial direction of the disc brake. However, depending on the oil passage structure which makes oil pressure chambers communicate each other for operating the pistons which are interlocked on both sides of the brake disc, the disc brake has a possibility of not only making the caliper body large-sized but also making an appearance shape of the disc brake complicated thus lowering merchantability of a motorcycle.

The present invention has been made under such circumstances and it is an object of the present invention to provide a vehicle-use disc brake having the oil passage structure which can realize the miniaturization of a disc brake and, at the same time, can realize the enhancement of merchantability of a motorcycle by simplifying an appearance shape of the disc brake.

### Means for Solving the Problem

To achieve the above-mentioned object, the invention described in claim 1 is directed to a vehicle-use disc brake which includes a caliper body having first and second bodies which sandwich a pair of pads arranged on both sides of a brake disc rotated with a wheel between the first and second bodies and the brake disc, first and second pistons which are capable of pushing both pads toward the brake-disc side and are fitted in the first and second bodies coaxially and slidably, third and fourth pistons which are capable of pushing both pads toward the brake-disc side and are fitted in the first and second bodies coaxially and slidably on one sides of the first and second pistons along the circumferential direction of the brake disc, and fifth and sixth pistons which are capable of pushing both pads toward the brake-disc side and are fitted in the first and second bodies coaxially and slidably on another sides of the first and second pistons along the circumferential direction of the brake disc, wherein the first and second pistons are interlockingly operated with each other, and the third to sixth pistons are interlockingly operated, the improvement is characterized in that in the inside of the caliper body, a first oil passage which makes first and second oil pressure chambers respectively facing back surfaces of the first and second pistons communicate with each other, and a second oil passage which makes third, fourth, fifth and sixth oil pressure chambers respectively facing back surfaces of the third to sixth pistons communicate with each other are formed.

The invention described in claim 2 is, in addition to the constitution of the invention described in claim 1, characterized in that the caliper body integrally includes a first connection portion which connects center portions of the first and second bodies along the circumferential direction of the brake disc and strides over the brake disc and second and third connection portions which connect both end portions of the first and second bodies along the circumferential direction of the brake disc and stride over the brake disc, and the first oil passage is formed in the first body, the second body and the first connection portion.

The invention described in claim 3 is, in addition to the constitution of the invention described in claim 2, characterized in that the second oil passage is formed of a first body-side oil passage formed in the first body to make the third and fifth oil pressure chambers communicate with each other, a second body-side oil passage formed in the second body to make the fourth and sixth oil pressure chambers communicate with each other, and a communication oil passage which is formed in either one of the second and third connection portions to connect the first body-side oil passage and the second body-side oil passage with each other.

The invention described in claim 4 is, in addition to the constitution of the invention described in claim 3, characterized in that, in the first body, a first cylinder hole having a bottom and allowing the first piston to be slidably fitted therein and has an outer end thereof closed by an end wall which forms the first oil pressure chamber between the first piston and the end wall, and third and fifth cylinder holes having bottoms which are formed longer than the first cylinder hole, are arranged on both sides of the first cylinder hole, allow the third and fifth pistons to be respectively slidably fitted therein, and have outer ends thereof closed by end walls which respectively form the third and fifth oil pressure chambers between the third and fifth pistons and the end walls are formed, and in the second body, second, fourth and sixth cylinder holes having both ends thereof opened and allowing the second, fourth and sixth pistons to be slidably fitted therein are formed, and closing members which close outer ends of the second, fourth and sixth cylinder holes are mounted on the second body such that the second, fourth and sixth oil pressure chambers are formed between the second, fourth and sixth pistons and the closing members, and the first body-side oil passage of the second oil passage is formed in the first body in a linearly extending manner along outside of the first oil pressure chamber along the axial direction of the first cylinder hole to make the third and fifth oil pressure chambers communicate with each other, and the second body-side oil passage of the second oil passage is formed in the second body in a linearly extending manner along outside or inside of the closing member of the second cylinder hole along the radial direction of the brake disc to make the fourth and sixth oil pressure chambers communicate with each other.

The invention described in claim 5 is, in addition to the constitution of the invention described in claim 3 or 4, characterized in that the communication oil passage of the second oil passage is formed in either one of the second and third connection portions to connect the first and second body-side oil passages with each other along outside of a mounting hole for mounting the caliper body on a vehicle-body-side.

The invention described in claim 6 is, in addition to the constitution of the invention described in any one of claims 1 or 5, characterized in that the disc brake is mounted on a front wheel of a motorcycle such that a first master cylinder which generates an oil pressure in response to a manipulation of a first brake manipulation member is connected to the second oil passage, and a second master cylinder which generates an oil pressure in response to a manipulation of a second brake manipulation member is connected to the first oil passage.

Here, a brake lever 21 of an embodiment corresponds to the first brake manipulation member of the present invention, and a brake pedal 23 of the embodiment corresponds to the second brake manipulation member of the present invention.

### Advantage of the Invention

According to the invention described in claim 1, the first oil passage which makes the first and second oil pressure chambers communicate with each other and the second oil passage which makes the third, fourth, fifth and sixth oil pressure chambers communicate with each other are formed in the inside of the caliper body and hence, it is unnecessary to connect the first and second bodies with a conduit which is arranged outside the caliper body so as to introduce an oil pressure whereby the miniaturization of the disc brake can be realized and, at the same time, merchantability of the motorcycle can be enhanced due to the simplification of an appearance shape of the disc brake.

Further, according to the invention described in claim 2, the caliper body is integrally formed of the first connection portion which connects center portions of the first and second bodies along the circumferential direction of the brake disc and strides over the disc brake, and the second and third connection portions which connects the first and second bodies and stride over the disc brake and hence, the number of parts can be decreased and, at the same time, time and efforts necessary for assembling the caliper body can be saved, and the caliper body can be light-weighted. Further, by effectively making use of the first connection portion which connects the center portions of the first and second bodies along the circumferential direction of the brake disc, it is possible to form the first oil passage which makes the first and second oil pressure chambers arranged in the center portions of the first and second bodies along the circumferential direction of the brake disc communicate with each other.

According to the invention described in claim 3, the second oil passage is formed of the first body-side oil passage formed in the first body to make the third and fourth oil pressure chambers communicate with each other, the second body-side oil passage formed in the second body to make the fourth and sixth oil pressure chambers communicate with each other, and the communication oil passage which is formed in either one of the second and third connection portions to connect the first body-side oil passage and the second body-side oil passage with each other. Due to such a constitution, by effectively making use of one of the second and third connection portions, it is possible to form the second oil passage having an approximately U-shape in a plan view in the inside of the caliper body.

According to the invention described in claim 4, out of the second oil passage which makes the third to sixth oil pressure chambers communicate with each other, the first body-side oil passage formed in the first body makes the third and fifth oil pressure chambers communicate with each other along outside of the first cylinder hole shorter than the third and fifth cylinder holes. Further, out of the second oil passage, the second body-side oil passage formed in the second body makes the fourth and sixth oil pressure chambers communicate with each other along outside or inside of the closing member in the radial direction of the brake disc to obviate the interference with the closing member which closes the outer end of the second cylinder hole. Due to such a constitution, it is possible to obviate the large-sizing of the first and second bodies for forming the first body-side oil passage and the second body-side oil passage.

According to the invention described in claim 5, the communication oil passage which connects the first and second body-side oil passages with each other is formed in either one of the second and third connection portions along outside of the mounting hole for mounting the caliper body on the vehicle-body-side. Due to such a constitution, a conduit which is arranged outside the caliper body for connecting the first and second body-side oil passages becomes unnecessary thus increasing merchantability of the motorcycle by simplifying an appearance shape of the caliper body.

Further, according to the invention described in claim 6, the disc brake of the present invention can be preferably used in front and rear interlocking brake devices of the motorcycle.

### Brief Description of the Drawings

Fig. 1: A view showing the constitution of a portion of a motorcycle-use brake device.
Fig. 2: A plan view showing a disc brake of the present invention.
Fig. 3: A view as viewed in the direction of an arrow 3 in Fig. 2.
Fig. 4: A view as viewed in the direction of an arrow 4 in Fig. 2.
Fig. 5: A cross-sectional view taken along a line 5-5 in Fig. 3.
Fig. 6: A cross-sectional view taken along a line 6-6 in Fig. 3.

### Best Mode for Carrying out the Invention

Hereinafter, a mode for carrying out the present invention is explained in conjunction with one embodiment of the present invention shown in attached drawings.

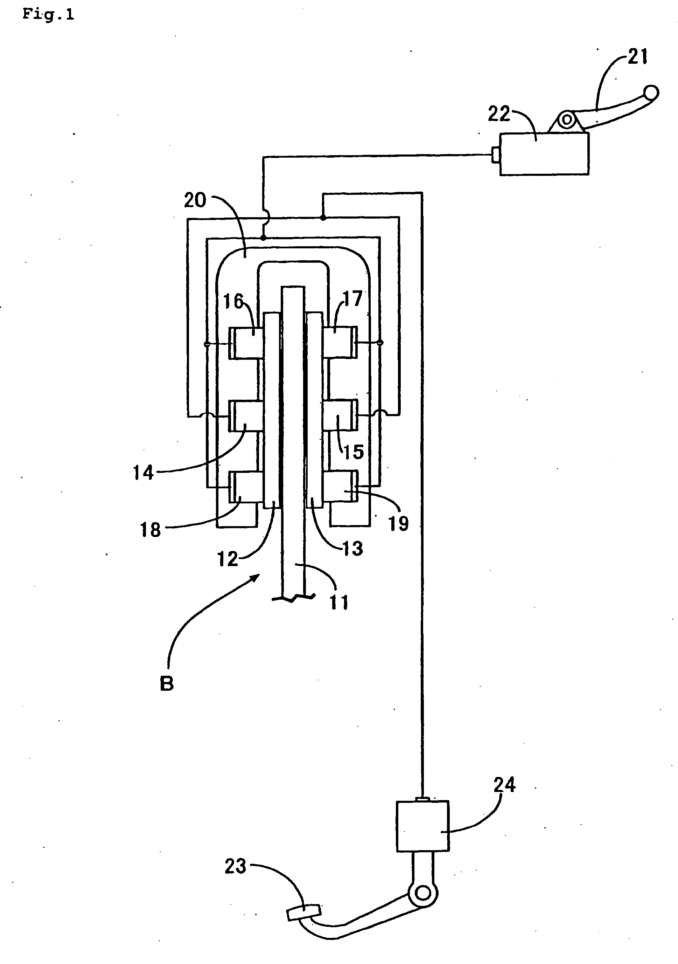

First of all, in Fig. 1, a disc brake B according to the present invention is mounted on a front wheel (not shown in the drawing) of a motorcycle. The disc brake B includes a brake disc 11 which is rotatable with the front wheel, first and second pads 12, 13 which are arranged on both sides of the brake disc 11, and a caliper body 20 which is arranged astride the brake disc 11 and in which first, third and fifth pistons 14, 16, 18 which are capable of pushing the first pad 12 toward a brake-disc-11 side and second, fourth and sixth pistons 15, 17, 19 which are capable of pushing the second pad 13 toward the brake-disc-11 side are fitted slidably. When an oil pressure is outputted from a first master cylinder 22 which outputs the oil pressure in response to a manipulation of a brake lever 21 which constitutes a first brake manipulation member, the third to sixth pistons 16 to 19 are operated interlockingly with each other so as to push the first and second pads 12, 13 toward the brake-disc-11 side, while when an oil pressure is outputted from a second master cylinder 24 which outputs the oil pressure in response to a manipulation of a brake pedal 23 which constitutes a second brake manipulation member, the first and second pistons 14, 15 are operated interlockingly with each other so as to push the first and second pads 12, 13 toward a brake-disc-11 side.

Further, the disc brake B is preferably applicable to a radial-mount-type disc brake which fixes the mounting direction of the caliper body 20 in the radial direction of a wheel by taking improvement of rigidity, detachability and maintainability of the caliper body 20 into consideration.

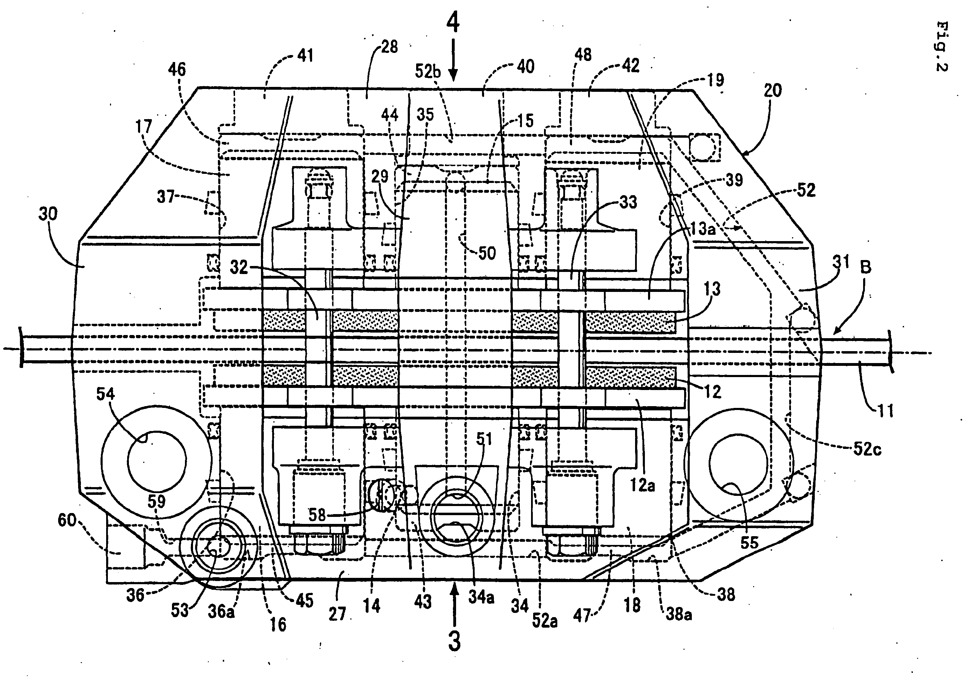

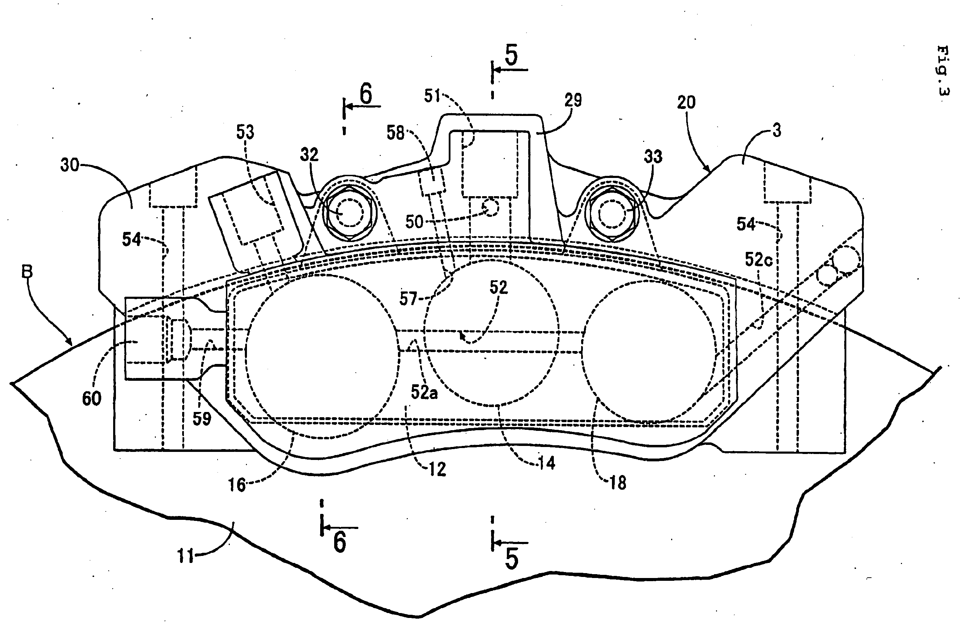

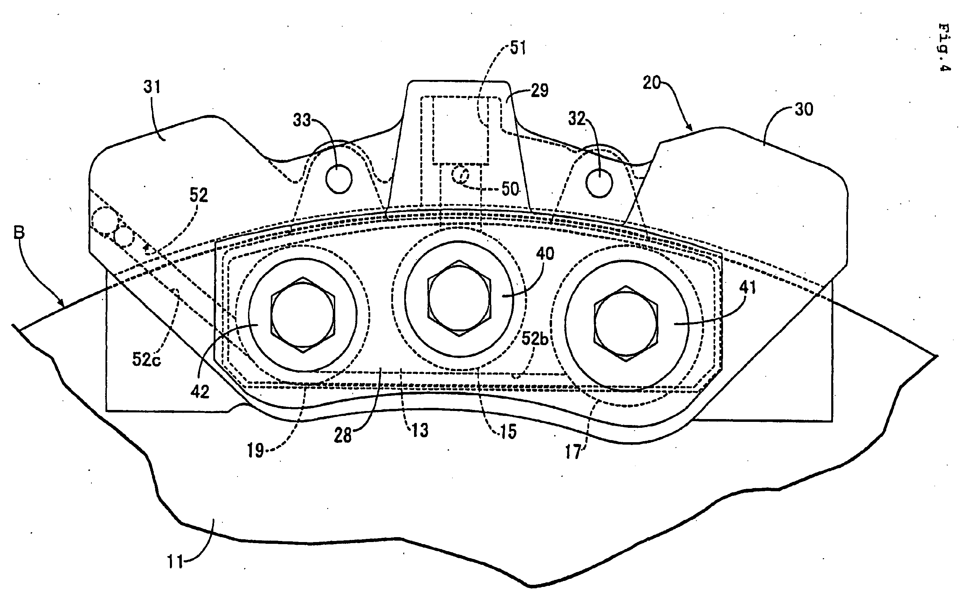

In Fig. 2 to Fig. 4, the caliper body 20 is integrally formed of a first body 27 which is arranged at a position where the first pad 12 is sandwiched between the first body 27 and the brake disc 11, a second body 28 which is arranged at a position where the second pad 13 is sandwiched between the second body 28 and the brake disc 11, a first connection portion 29 which connects center portions of the first and second bodies 27, 28 along the circumferential direction of the brake disc 11 and strides over the brake disc 11, and second and third connection portions 30, 31 which connect both end portions of the first and second bodies 27, 28 along the circumferential direction of the brake disc 11 and stride over the brake disc 11.

Back plates 12a, 13a of the first and second pads 12, 13 are slidably supported on a hanger pin 32 which is arranged between the first connection portion 29 and the second connection portion 30 and extends between the first and second bodies 27, 28, and a hanger pin 33 which is arranged between the first and third connection portions 29, 31 and extends between the first and second bodies 27, 28 in the axial direction of the brake disc 11.

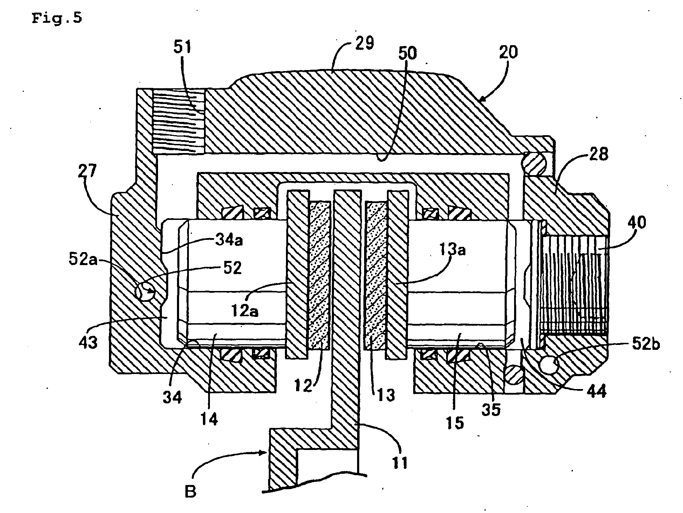

To explain this embodiment also in conjunction with Fig. 5, in the first body 27, a first cylinder hole 34 which allows the first piston 14 capable of pushing the first pad 12 toward the brake-disc-11 side to be slidably fitted therein and has an outer end thereof closed by an end wall is formed. In the second body 28, a second cylinder hole 35 which allows the second piston 15 capable of pushing the second pad 13 toward the brake-disc-11 side to be slidably fitted therein and has both ends thereof opened is formed coaxially with the first cylinder hole 34. An outer end of the second cylinder hole 35 is fluid-tightly closed by a first closing member 40 which is threadedly engaged with the second body 28, for example. Further, a first oil pressure chamber 43 is formed between an end wall 34a of the first cylinder hole 34 and the first piston 14, and a second oil pressure chamber 44 is formed between the second piston 15 and the first closing member 40.

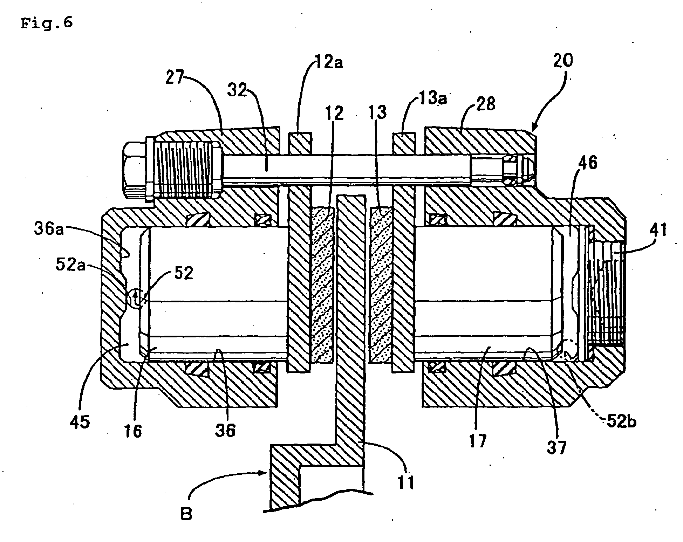

To explain this embodiment also in conjunction with Fig. 6, in the first body 27, third and fifth cylinder holes 36, 38 having bottoms and allowing the third and fifth pistons 16, 18 capable of pushing the first pad 12 toward the brake-disc-11 side to be respectively slidably fitted therein and have outer ends thereof closed by end walls 36a, 38a are formed in a state that the third and fifth cylinder holes 36, 38 are arranged on both sides of the first cylinder hole 34. The third and fifth cylinder holes 36, 38 are formed longer than the first cylinder hole 34. Further, the third and fifth oil pressure chambers 45, 47 are formed between the end walls 36a, 38a of the third and fifth cylinder holes 36, 38 and the third and fifth pistons 16, 18.

Further, in the second body 28, fourth and sixth cylinder holes 37, 39 having both ends thereof opened and allowing the fourth and sixth pistons 17, 19 capable of pushing the second pad 13 toward the brake-disc-11 side to be slidably fitted therein are formed on both sides of the second cylinder hole 35 coaxially with the third and fifth cylinder holes 36, 38. Outer ends of the fourth and sixth cylinder holes 37, 39 are respectively fluid-tightly closed by second and third closing members 41, 42 which are threadedly engaged with the second body 28, for example. A fourth oil pressure chamber 46 is formed between the fourth piston 17 and the second closing member 41, and a sixth oil pressure chamber 48 is formed between the sixth piston 19 and the third closing member 42.

Here, the first and second oil pressure chamber 43, 44 are communicated with each other by way of a first oil passage 50. As explicitly shown in Fig. 5, the first oil passage 50 is formed in the first body 27, the second body 28 and the first connection portion 29 so as to make a plurality of oil holes communicate with each other. A first connection hole 51 which opens at an outer surface of an outer side of the first body 27 along the radial direction of the brake disc 11 is formed in the first body 27 in a state that the first connection hole 51 is communicated with the first oil passage 50, and the first connection hole 51 is connected to the first master cylinder 22.

Further, in the first body 27, a first bleed hole 57 which is communicated with the first oil pressure chamber 43 and opens at the outer surface of the outer side of the first body 27, is formed on one side of the first connection hole 51. A lid member 58 which fluid-tightly closes an outer end of the first bleed hole 57 is detachably mounted on the first body 27 by threading or the like.

The third to sixth oil pressure chambers 45 to 48 are communicated with each other by way of the second oil passage 52. The second oil passage 52 is formed of a first body-27-side oil passage 52a which is formed in the first body 27 in an extending manner along outside of the first oil pressure chamber 43 to make the third and fifth oil pressure chambers 45, 47 communicate with each other, a second body-28-side oil passage 52b which is formed in the second body 28 in an extending manner along outside or inside (in this embodiment, inside) of the first closing member 40 of the second cylinder hole 35 along the radial direction of the brake disc 11 to make the fourth and sixth oil pressure chambers 46, 48 communicate with each other, and a communication oil passage 52c which is formed in either one of the second and third connection portions 30, 31 (in this embodiment, the third connection portion 31) to connect the first-body-27-side oil passage 52a and the second-body-side oil passage 52b with each other.

The first-body-side oil passage 52a is formed in the first body 27 in a linearly extending manner to connect the third and fifth oil pressure chambers 45, 47 while traversing the first oil pressure chamber 43 as viewed in a side view, and the second-body-side oil passage 52b is formed in the second body 28 in a linearly extending manner in parallel with the first-body-side oil passage 52a.

Here, a second bleed hole 59 is formed in the first body 27 in a state that the second bleed hole 59 extends coaxially with the first-body-side oil passage 52a of the second oil passage 52, is communicated with the third oil pressure chamber 45 and, at the same time, is opened at the outer surface of the first body 27. A lid member 60 which fluid-tightly closes an outer end of the second bleed hole 59 is detachably mounted on the first body 27 by threading or the like.

Further, a second connection hole 53 which opens at the outer surface of the outer side of the first body 27 along the radial direction of the brake disc 11 is formed in the first body 27 such that the second connection hole 53 is communicated with the third oil pressure chamber 45, and the second master cylinder 24 is connected to the second connection hole 53.

Here, the caliper body 20 is fixed to a vehicle body not shown in the drawing, and in a connecting portion of the second and third connection portions 30, 31 and the first body 27, mounting holes 54, 55 which are provided for mounting the caliper body 20 on the vehicle body side are respectively formed. Further, the communication oil passage 52c is formed in the third connection portion 31 so as to make a plurality of oil holes communicate with each other. As shown in Fig. 2, the communication oil passage 52c is formed in the third connection portion 31 in an extending manner along outside of the mounting hole 55 formed in the connecting portion of the third connection portion 31 to the first body 27 to make the first and second body-side oil passages 52a, 52b communicate with each other.

Next, the manner of operation of this embodiment is explained. The first oil passage 50 which makes the first and second oil pressure chambers 43, 44 communicate with each other and the second oil passage 52 which makes the third, fourth, fifth and sixth oil pressure chambers 45 to 48 communicate with each other are formed in the inside of the caliper body 20 and hence, it becomes unnecessary to connect the first and second bodies 27, 28 by a conduit which is arranged outside the caliper body 20 so as to introduce an oil pressure. Accordingly, the miniaturization of the disc brake B can be realized and, at the same time, merchantability of the motorcycle can be enhanced due to the simplification of an appearance shape of the disc brake.

Further, the caliper body 20 is integrally formed of the first and second bodies 27, 28 and the first to third connection portions 29, 30, 31 which connect the first and second bodies 27, 28 and strides over the disc brake B and hence, it is possible to reduce the number of parts and, at the same time, to save time and efforts for assembling the caliper body 20 thus realizing the reduction of weight of the caliper body 20.

Further, by effectively making use of the first connection portion 29 which connects the center portions of the first and second bodies 27, 28 along the circumferential direction of the brake disc 11, it is possible to form the first oil passage 50 which makes the first and second oil pressure chambers 43, 44 arranged on the center portions of the first and second bodies 27, 28 along the circumferential direction of the brake disc 11 communicate with each other.

Further, the second oil passage 52 which makes the third to sixth oil pressure chambers 45 to 48 communicate with each other is formed of the first body-side oil passage 52a which is formed in the first body 27 to make the third and fifth oil pressure chambers 45, 47 communicate with each other, the second body-side oil passage 52b which is formed in the second body 28 to make the fourth and sixth oil pressure chambers 46, 48 communicate with each other, and a communication oil passage 52c which is formed in either one of the second and third connection portions 30, 31 to connect the first-body-side oil passage 52a and the second-body-side oil passage 52b with each other. By effectively making use of either one of the second and third connection portions 30, 31, it is possible to form the second oil passage 52 which is formed in a substantially U shape as viewed in a plan view in the inside of the caliper body 20.

Further, out of the second oil passage 52, the first body-side oil passage 52a which is formed in the first body 27 extends outside the first cylinder hole 34 which is formed shorter than the third and fifth cylinder holes 36, 38 to make the third and fifth oil pressure chambers 45, 47 communicate with each other, and out of the second oil passage 52, the second body-side oil passage 52b which is formed in the second body 28 extends outside or inside (in this embodiment, inside) the first closing member 40 along the radial direction of the brake disc 11 while avoiding the interference with the first closing member 40 which closes the outer end of the second cylinder hole 35 and makes the fourth and sixth oil pressure chambers 46, 48 communicate with each other. Accordingly, it is possible to prevent the first and second bodies 27, 28 from becoming large-sized due to the formation of the first body-side oil passage 52a and the second body-side oil passage 52b.

Further, the communication oil passage 52c which connects the first and second body-side oil passages 52a, 52b is formed in the third connection portion 31 in an extending manner outside the mounting hole 55 for mounting the caliper body 20 on the vehicle body side and hence, it becomes unnecessary to provide a conduit which is arranged outside the caliper body 20 for connecting the first and second body-side oil passages 52a, 52b. Accordingly, it is possible to simplify the appearance shape of the caliper body 20 thus enhancing the merchantability.

Further, the disc brake B is mounted on the front wheel of the motorcycle such that the first master cylinder 22 which generates an oil pressure in response to the manipulation of the brake lever 21 is connected to the first oil passage 50 and, at the same time, the second master cylinder 24 which generates an oil pressure in response to the manipulation of the brake pedal 23 is connected to the second oil passage 52 and hence, it is possible to preferably use the disc brake B of the present invention in front and rear interlocking brake devices of a motorcycle.

Although the embodiment of the present invention has been explained heretofore, the present invention is not limited to the above-mentioned embodiment, and various modifications are conceivable in design without departing from the present invention described in claims.

It is an aim of the present invention to realize, in a vehicle-use disc brake in which three pistons are arranged respectively on both sides of a brake disc, the miniaturization of a disc brake and, at the same time, to enhance the merchantability of a motorcycle by simplifying an appearance shape of the disc brake.

A first oil passage 50 which makes first and second oil pressure chambers 43, 44 respectively facing back surfaces of the first and second pistons 14, 15 communicate with each other, and a second oil passage 52 which makes third, fourth, fifth and sixth oil pressure chambers 45, 46, 47, 48 respectively facing back surfaces of the third to sixth pistons 16 to 19 communicate with each other are formed in the inside of a caliper body 20.

## Claims

1. A vehicle-use disc brake comprising a caliper body (20) having first and second bodies (27, 28) which sandwich a pair of pads (12, 13) arranged on both sides of a brake disc (11) rotated with a wheel between the first and second bodies (27, 28) and the brake disc (11), first and second pistons (14, 15) which are capable of pushing both pads (12, 13) toward the brake-disc-(11) side and are fitted in the first and second bodies (27, 28) coaxially and slidably, third and fourth pistons (16, 17) which are capable of pushing both pads (12, 13) toward the brake-disc-(11) side and are fitted in the first and second bodies (27, 28) coaxially and slidably on one sides of the first and second pistons (14, 15) along the circumferential direction of the brake disc (11), and fifth and sixth pistons (18, 19) which are capable of pushing both pads (12, 13) toward the brake-disc-(11) side and are fitted in the first and second bodies (17, 18) coaxially and slidably on another sides of the first and second pistons (14, 15) along the circumferential direction of the brake disc (11), wherein the first and second pistons (14, 15) are interlockingly operated with each other, and the third to sixth pistons (16 to 19) are interlockingly operated,
the brake being **characterized in that** in the inside of the caliper body (20), a first oil passage (50) which makes first and second oil pressure chambers (43, 44) respectively facing back surfaces of the first and second pistons (14, 15) communicate with each other, and a second oil passage (52) which makes third, fourth, fifth and sixth oil pressure chambers (45, 46, 47, 48) respectively facing back surfaces of the third to sixth pistons (16 to 19) communicate with each other are formed.

2. A vehicle-use disc brake according to claim 1, wherein the caliper body (20) integrally includes a first connection portion (29) which connects center portions of the first and second bodies (27, 28) along the circumferential direction of the brake disc (11) and strides over the brake disc (11) and second and third connection portions (30, 31) which connect both end portions of the first and second bodies (27, 28) along the circumferential direction of the brake disc (11) and stride over the brake disc (11), and the first oil passage (50) is formed in the first body (27), the second body (28) and the first connection portion (29).

3. A vehicle-use disc brake according to claim 2, wherein the second oil passage (52) is formed of a first body-side oil passage (52a) formed in the first body (27) to make the third and fifth oil pressure chambers (45, 47) communicate with each other, a second body-side oil passage (52b) formed in the second body (28) to make the fourth and sixth oil pressure chambers (46, 48) communicate with each other, and a communication oil passage (52c) which is formed in either one of the second and third connection portions (30, 31) to connect the first body-side oil passage (52a) and the second body-side oil passage (52b) with each other.

4. A vehicle-use disc brake according to claim 3, wherein in the first body (27), a first cylinder hole (34) having a bottom and allowing the first piston (14) to be slidably fitted therein and has an outer end thereof closed by an end wall (34a) which forms the first oil pressure chamber (43) between the first piston (14) and the end wall (34a), and third and fifth cylinder holes (36, 38) having bottoms which are formed longer than the first cylinder hole (34), are arranged on both sides of the first cylinder hole (34), allow the third and fifth pistons (16, 18) to be respectively slidably fitted therein, and have outer ends thereof closed by end walls (36a, 38a) which respectively form the third and fifth oil pressure chambers (45, 47) between the third and fifth pistons (16, 18) and the end walls (36a, 38a) are formed, and
in the second body (28), second, fourth and sixth cylinder holes (35, 37, 39) having both ends thereof opened and allowing the second, fourth and sixth pistons (15, 17, 19) to be slidably fitted therein are formed,
closing members (40, 41, 42) which close outer ends of the second, fourth and sixth cylinder holes (35, 37, 39) are mounted on the second body (28) such that the second, fourth and sixth oil pressure chambers (44, 46, 48) are formed between the second, fourth and sixth pistons (15, 17, 19) and the closing members (40, 41, 42), and the first body-side oil passage (52a) of the second oil passage (52) is formed in the first body (27) in a linearly extending manner along outside of the first oil pressure chamber (43) along the axial direction of the first cylinder hole (34) to make the third and fifth oil pressure chambers (45, 47) communicate with each other, and the second body-side oil passage (52b) of the second oil passage (52) is formed in the second body (28) in a linearly extending manner along outside or inside of the closing member (40) of the second cylinder hole (35) along the radial direction of the brake disc (11) to make the fourth and sixth oil pressure chambers (46, 48) communicate with each other.

5. A vehicle-use disc brake according to claim 3 or 4, wherein the communication oil passage (52c) of the second oil passage (52) is formed in either one of the second and third connection portions (30, 31) to connect the first and second body-side oil passages (52a, 52b) with each other along outside of a mounting hole (55) for mounting the caliper body (20) on a vehicle-body-side.

6. A vehicle-use disc brake according to any one of claims 1 to 5, wherein the disc brake is mounted on a front wheel of a motorcycle such that a first master cylinder (22) which generates an oil pressure in response to a manipulation of a first brake manipulation member (21) is connected to the second oil passage (52), and a second master cylinder (24) which generates an oil pressure in response to a manipulation of a second brake manipulation member (23) is connected to the first oil passage (50).

## Patentansprüche

1. In einem Fahrzeug zu verwendende Scheibenbremse, umfassend einen Sattelkörper (20), der erste und zweite Körper (27, 28) aufweist, die ein Paar von Belägen (12, 13) zwischen sich aufnehmen, die an beiden Seiten einer sich mit einem Rad drehenden Bremsscheibe (11) zwischen den ersten und zweiten Körpern (27, 28) und der Bremsscheibe (11) angeordnet sind; erste und zweite Kolben (14, 15), die in der Lage sind, beide Beläge (12, 13) zur Seite der Bremsscheibe (11) hin zu drücken, und die in die ersten und zweiten Körper (27, 28) koaxial und verschiebbar eingesetzt sind; dritte und vierte Kolben (16, 17), die in der Lage sind, beide Beläge (12, 13) zur Seite der Bremsscheibe (11) hin zu drücken, und die an den einen Seiten der ersten und zweiten Kolben (14, 15) entlang der Umfangsrichtung der Bremsscheibe (11) in die ersten und zweiten Körper (27, 28) koaxial und verschiebbar eingesetzt sind; und fünfte und sechste Kolben (18, 19), die in der Lage sind, beide Beläge (12, 13) zur Seite der Bremsscheibe (11) hin zu drücken, und die an den anderen Seiten der ersten und zweiten Kolben (14, 15) entlang der Umfangsrichtung der Bremsscheibe (11) in die ersten und zweiten Körper (17, 18) koaxial und verschiebbar eingesetzt sind, worin die ersten und zweiten Kolben (14, 15) gekoppelt betätigt werden und die dritten bis sechsten Kolben (16 bis 19) gekoppelt betätigt werden,
wobei die Bremse **dadurch gekennzeichnet ist, dass** in der Innenseite des Sattelkörpers (20) ein erster Ölkanal (50), der erste und zweite Öldruckkammern (43, 44), die jeweils zu den Rückseiten der ersten und zweiten Kolben (14, 15) weisen, miteinander in Verbindung setzt, und ein zweiter Ölkanal (52), der dritte, vierte, fünfte und sechste Öldruckkammern (45, 46, 47, 48), die jeweils zu den Rückseiten der dritten bis sechsten Kolben (16 bis 19) weisen, miteinander in Verbindung setzt, ausgebildet sind.

2. In einem Fahrzeug zu verwendende Scheibenbremse nach Anspruch 1, worin der Sattelkörper (20) einstückig einen ersten Verbindungsabschnitt (29), der Mittelabschnitte der ersten und zweiten Körper (27, 28) entlang der Umfangsrichtung der Bremsscheibe (11) verbindet und die Bremsscheibe (11) überspannt, sowie zweite und dritte Verbindungsabschnitte (30, 31), die beide Endabschnitte der ersten und zweiten Körper (27, 28) entlang der Umfangsrichtung der Bremsscheibe (11) verbinden und die Bremsscheibe (11) überspannen, enthält, und der erste Ölkanal (50) in dem ersten Körper (27), dem zweiten Körper (28) und dem ersten Verbindungsabschnitt (29) ausgebildet ist.

3. In einem Fahrzeug zu verwendende Scheibenbremse nach Anspruch 2, worin der zweite Ölkanal (52) aus einem ersten körperseitigen Ölkanal (52a), der in dem ersten Körper (27) ausgebildet ist, um die dritten und fünften Öldruckkammern (45, 47) miteinander in Verbindung zu setzen, einem zweiten körperseitigen Ölkanal (52b), der in dem zweiten Körper (28) ausgebildet ist, um die vierten und sechsten Öldruckkammern (46, 48) miteinander in Verbindung zu setzen, und einem Verbindungsölkanal (52c), der in einem der zweiten und dritten Verbindungsabschnitte (30, 31) ausgebildet ist, um den ersten körperseitigen Ölkanal (52a) mit dem zweiten körperseitigen Ölkanal (52b) zu verbinden, gebildet ist.

4. In einem Fahrzeug zu verwendende Scheibenbremse nach Anspruch 3, worin in dem ersten Körper (27) ein erstes Zylinderloch (34), das einen Boden hat und erlaubt, dass der erste Kolben (14) darin verschiebbar eingesetzt wird, und dessen Außenende durch eine Endwand (34a) verschlossen ist, die die erste Öldruckkammer (43) zwischen dem ersten Kolben (14) und der Endwand (34a) bildet; und dritte und fünfte Zylinderlöcher (36, 38) mit Böden, die länger ausgebildet sind als das erste Zylinderloch (34), an beiden Seiten des ersten Zylinderlochs (34) angeordnet sind, erlauben, dass die dritten und fünften Kolben (16, 18) darin verschiebbar eingesetzt werden, und deren Außenenden durch Endwände (36a, 38a) verschlossen sind, die jeweils die dritten und fünften Öldruckkammern (45, 47) zwischen den dritten und fünften Kolben (16, 18) und den Endwänden (36a, 38a) bilden, ausgebildet sind, und in dem zweiten Körper (28), zweite, vierte und sechste Zylinderlöcher (35, 37, 39), deren beide Enden offen sind und erlauben, dass die zweiten, vierten und sechsten Kolben (15, 17, 19) darin verschiebbar eingesetzt werden, ausgebildet sind,
Verschlusselemente (40, 41, 42), die Außenenden der zweiten,vierten und sechsten Zylinderlöcher (35, 37, 39) verschließen, an dem zweiten Körper (28) derart angebracht sind, dass die zweiten, vierten und sechsten Öldruckkammern (44, 46, 48) zwischen den zweiten, vierten und sechsten Kolben (15, 17, 19) und den Verschlusselementen (40, 41, 42) ausgebildet sind, und der erste körperseitige Ölkanal (52a) des zweiten Ölkanals (52) in dem ersten Körper (27) entlang der Außenseite der ersten Öldruckkammer (43) entlang der axialen Richtung des ersten Zylinderlochs (34) sich linear erstreckend ausgebildet ist, um die dritten und fünften Öldruckkammern (45, 47) miteinander in Verbindung zu setzen, und der zweite körperseitige Ölkanal (52b) des zweiten Ölkanals (52) in dem zweiten Körper (28) entlang der Außenseite oder Innenseite des Verschlusselements (40) des zweiten Zylinderlochs (35) entlang der radialen Richtung der Bremsscheibe (11) sich linear erstreckend ausgebildet ist, um die vierten und sechsten Öldruckkammern (46, 48) miteinander in Verbindung zu setzen.

5. In einem Fahrzeug zu verwendende Scheibenbremse nach Anspruch 3 oder 4, worin der Verbindungsölkanal (52c) des zweiten Ölkanals (52) in einem der zweiten und dritten Verbindungsabschnitte (30, 31) ausgebildet ist, um die ersten und zweiten körperseitigen Ölkanale (52a, 52b) entlang der Außenseite eines Befestigungslochs (55) zum Befestigen des Sattelkörpers (20) an einer Fahrzeugkörperseite miteinander zu verbinden.

6. In einem Fahrzeug zu verwendende Scheibenbremse nach einem der Ansprüche 1 bis 5, worin die Scheibenbremse an einem Vorderrad eines Kraftrads angebracht ist, derart, dass ein erster Hauptzylinder (22), der in Antwort auf Betätigung eines ersten Bremsbetätigungselements (21) einen Öldruck erzeugt, mit dem zweiten Ölkanal (52) verbunden ist, und ein zweiter Hauptzylinder (24), der in Antwort auf Betätigung eines zweiten Bremsbetätigungselements (23) einen Öldruck erzeugt, mit dem ersten Ölkanal (50) verbunden ist.

## Revendications

1. Frein à disque pour utilisation sur un véhicule, comprenant un corps d'étrier (20) ayant des premier et deuxième corps (27, 28) prenant en sandwich une paire de garnitures (12, 13) agencées sur les deux côtés d'un disque de frein (11) entraîné en rotation avec une roue, entre les premier et deuxième corps (27, 28) et le disque de frein (11) ; des premier et deuxième pistons (14, 15), capables de pousser les deux garnitures (12, 13) vers le côté du disque de frein (11) et montés, de façon coaxiale et permettant un coulissement, dans les premier et deuxième corps (27, 28), des troisième et quatrième pistons (16, 17), capables de pousser les deux garnitures (12, 13) vers le côté du disque de frein (11) et montés, de façon coaxiale et permettant un coulissement, dans les premier et deuxième corps (27, 28), sur un côté des premier et deuxième pistons (14, 15), dans la direction circonférentielle du disque de frein (11), et des cinquième et sixième pistons (18, 19), capables de pousser les deux garnitures (12, 13) vers le côté du disque de frein (11) et montés, de façon coaxiale et permettant un coulissement, dans les premier et deuxième corps (27, 28), sur un côté des premier et deuxième pistons (14, 15), dans la direction circonférentielle du disque de frein (11), dans lequel les premier et deuxième pistons (14, 15) sont actionnés de manière verrouillée entre eux, et les troisième à sixième pistons (16 à 19) sont actionnés de manière verrouillée entre eux,
le frein étant **caractérisé en ce que**, à l'intérieur du corps d'étrier (20), sont formés un premier passage à huile (50), faisant communiquer entre elles des première et deuxième chambres à pression d'huile (43, 44), respectivement situées en regard de surfaces arrière des premier et deuxième pistons (14, 15), et un deuxième passage à huile (52), faisant communiquer entre elles des troisième, quatrième, cinquième et sixième chambres à pression d'huile (45, 46, 47, 48), respectivement situées en regard de surfaces arrière des troisième à sixième pistons (16 à 19).

2. Frein à disque pour utilisation sur un véhicule selon la revendication 1, dans lequel le corps d'étrier (20) comprend, d'une seule pièce, une première partie de connexion (29), reliant des parties centrales des premier et deuxième corps (27, 28), dans la direction circonférentielle du disque de frein (11), et enjambe le disque de frein (11), et des deuxième et troisième parties de connexion (30, 31), reliant les deux parties d'extrémité des premier et deuxième corps (27, 28), dans la direction circonférentielle du disque de frein (11), et enjambent le disque de frein (11), et le premier passage à huile est formé dans le premier corps (27), le deuxième corps (28) et la première partie de connexion (29).

3. Frein à disque pour utilisation sur un véhicule selon la revendication 2, dans lequel le deuxième passage à huile (52) est composé d'un premier passage à huile de côté corps (52a), formé dans le premier corps (27), pour faire communiquer entre elles les troisième et cinquième chambres à pression d'huile (45, 47), d'un deuxième passage à huile de côté corps (52b), formé dans le deuxième corps (28), pour faire communiquer entre elles les quatrième et sixième chambres à pression d'huile (46, 48), et d'un passage à huile de communication (52c), formé dans l'une des deuxième et troisième parties de connexion (30, 31), pour relier ensemble le premier passage à huile de côté corps (52a) et le deuxième passage à huile de côté corps (52b).

4. Frein à disque pour utilisation sur un véhicule selon la revendication 3, dans lequel, dans le premier corps, sont formés un premier trou cylindrique (34), ayant un fond et permettant au premier piston (14) d'y être monté à coulissement et dont une extrémité extérieure est fermée par une paroi d'extrémité (34a), formant la première chambre à pression d'huile (43) entre le premier piston (14) et la paroi d'extrémité (34a), et des troisième et cinquième trous cylindrique (36, 38), ayant des fonds formés de manière plus longue que le premier trou cylindrique (34), sont agencés sur les deux côtés du premier trou cylindrique (34), en permettant aux troisième et cinquième pistons (16, 18) d'y être respectivement montés à coulissement, et dont des extrémités extérieures sont fermées par des parois d'extrémité (36a, 38a), formant respectivement les troisième et cinquième chambres à pression d'huile (45, 47), entre les troisième et cinquième piston (16, 18) et les parois d'extrémité (36a, 8a), et
dans le deuxième corps (28), sont formés des deuxième, quatrième et sixième trous cylindriques (35, 37, 39), dont les deux extrémités sont ouvertes et permettant aux deuxième, quatrième et sixième pistons (15, 17, 19) d'y être montés à coulissement,
des organes de fermeture (40, 41, 42), fermant des extrémités extérieures des deuxième, quatrième et sixième trous cylindriques (35, 37, 39), sont montés sur le deuxième corps (28), de manière que les deuxième, quatrième et sixième chambres à pression d'huile (44, 46, 48) soient formées entre les deuxième, quatrième et sixième pistons (15, 17, 19) et les organes de fermeture (40, 41, 42), et le premier passage à huile de côté corps (52a) du deuxième passage à huile (52) est formé dans le premier corps (27), d'une manière s'étendant de façon linéaire, à l'extérieur de la première chambre à pression d'huile (43), dans la direction axiale du premier trou cylindrique (34), de manière à faire communiquer entre elles les troisième et cinquième chambres à pression d'huile (45, 47), et le deuxième passage à huile de côté corps (52b) du deuxième passage à huile (52) est formé dans le deuxième corps (28), d'une manière s'étendant de façon linéaire, à l'extérieur ou à l'intérieur de l'organe de fermeture (40) du deuxième trou cylindrique (35), dans la direction radiale du disque de frein (11), de manière à faire communiquer entre elles les quatrième et sixième chambres à pression d'huile (46, 48).

5. Frein à disque pour utilisation sur un véhicule selon la revendication 3 ou 4, dans lequel le passage à huile de communication (52c) du deuxième passage à huile (52) est formé dans l'une des deuxième et troisième parties de connexion (30, 31), de manière à relier entre eux les premier et deuxième passages à huile de côté corps (52a, 52b) à l'extérieur d'un trou de montage (55), pour le montage du corps d'étrier (20) sur un côté de carrosserie de véhicule.

6. Frein à disque pour utilisation sur un véhicule selon l'une quelconque des revendications 1 à 5, dans lequel le disque de frein est monté sur une roue avant d'un motocycle, de manière qu'un premier maître-cylindre (22), générant une pression d'huile en réponse à une manipulation d'un premier organe de manipulation de frein (21), est connecté au deuxième passage à huile (52), et un deuxième maître-cylindre (24), générant une pression d'huile en réponse à une manipulation d'un deuxième organe de manipulation de frein (23), est connecté au premier passage à huile (50).
